# EUROPÄISCHE PATENTSCHRIFT

(11) **EP 2 631 157 B1**
(45) Veröffentlichungstag und Bekanntmachung des Hinweises auf die Patenterteilung: **09.09.2015**
(21) Anmeldenummer: 13153976.9
(22) Anmeldetag: 05.02.2013
(51) Int. Cl.: B62D 15/02, G01D 5/14

(54) **Sensoranordnung zur Erfassung von Drehwinkeln an einem rotierenden Bauteil in einem Fahrzeug**
Sensor assembly for detecting angles of rotation on a rotating component in a vehicle
Agencement de capteur destiné à déterminer les angles de rotation sur un composant rotatif dans un véhicule

(30) Priorität: 21.02.2012 DE 102012202632
(43) Veröffentlichungstag der Anmeldung: 28.08.2013
(73) Patentinhaber: ROBERT BOSCH GMBH, 70442 Stuttgart (DE)
(72) Erfinder: Has, Remigius, 71120 Grafenau-Daetzingen (DE); Henrici, Fabian, 70195 Stuttgart (DE)

(56) Entgegenhaltungen:
- WO-A1-03/091081
- DE-A1- 10 309 060

## Beschreibung

### Stand der Technik

Die Erfindung geht aus von einer Sensoranordnung zur Erfassung von Drehwinkeln an einem rotierenden Bauteil in einem Fahrzeug nach der Gattung des unabhängigen Patentanspruchs 1.

Bei dem bekannten Lenkwinkelsensor wird ein Zählrad zur Bestimmung der Anzahl der Umdrehungen des Lenkrades berührungslos mittels Magnetfeldsensoren abgetastet. Ein derartiges System hat den Nachteil, dass bei ausgeschalteter Zündung ein Ruhestrom bereitgestellt werden muss, um ein Verdrehen des Lenkrades bei ausgeschalteter Zündung erkennen zu können. Bei dauerhafter Nichtbenutzung des Fahrzeuges führt dies zu einer unerwünschten Entleerung der Fahrzeugbatterie. Wird ein solcher Ruhestrom nicht bereitgestellt, kann der Lenkwinkel nicht mehr eindeutig bestimmt werden, wenn ein Verdrehen des Lenkrades bei ausgeschalteter Zündung oder abgeklemmter Batterie erfolgt.

In der Offenlegungsschrift DE 10 2007 052 162 A1 werden beispielsweise eine Messeinrichtung zur berührungslosen Erfassung eines Drehwinkels oder eines linearen Weges sowie ein Pedalmodul mit einer solchen Messeinrichtung beschrieben. Der erfasste Drehwinkel oder der erfasste lineare Weg ergibt sich aufgrund einer Relativbewegung zwischen wenigstens zwei Körpern, welche durch Federmittel gegeneinander in ihrer Ausgangslage vorgespannt sind. Die Federmittel weisen Windungen aus einem elektrisch leitenden Material auf und die Relativbewegung der Körper verursacht eine Längenänderung der Federmittel. Es ist vorgesehen, dass wenigstens ein Teil der Windungen der Federmittel von einer magnetischen Spule umfasst sind, welche zusammen mit wenigstens einem Kondensator von einem Schwingkreis umfasst ist. Zudem ist eine Auswerteeinrichtung vorgesehen, welche in Abhängigkeit von der Änderung der Resonanzfrequenz des Schwingkreises, welche auf der durch die Relativbewegung der Körper hervorgerufenen Längenänderung der Federmittel beruht, ein Signal aussteuert, dass zur Erkennung und Berechnung der Relativbewegung ausgewertet werden kann. Um die Drehbewegung eines Fahrpedalhebels gegenüber einem Lagerbock in eine hinsichtlich des Messprinzips einfachere lineare Bewegung zu wandeln, können die Federelemente sich mit ihrem einen Ende an einer am Lagerbock ausgebildeten Stützfläche und mit dem anderen Ende an einem in Bezug zu einer Schwenkachse zwischen dem Fahrpedalhebel und dem Lagerbock einen Hebelarm bildenden Stützarm des Fahrpedalhebels abstützen.

In der Offenlegungsschrift DE 10 2008 011 448 A1 wird beispielsweise eine Anordnung zur Erfassung eines Drehwinkels beschrieben. Die beschriebene Anordnung umfasst Geber und Sensoren, welche in Abhängigkeit von einer Drehwinkeländerung eines rotierenden Bauteils von den Gebern erzeugte Änderungen einer physikalischen Größe als digital auswertbare Signale detektieren. Das rotierende Bauteil weist mindestens einen an seinem Umfang gekoppelten, durch seine Rotation sich drehenden Satelliten kleineren Umfangs, vorzugsweise mit einem Winkelsensor auf, welcher über ein axial gekoppeltes Hypozykloidgetriebe eine ebenfalls rotierende Hypozykloidscheibe oder Hypozykloidzahnrad antreibt, deren Umdrehungsgeschwindigkeit durch das Hypozykloidgetriebe derart untersetzt ist, dass hieraus eine Umdrehungszahl des rotierenden Bauteils und der absolute Lenkwinkel über mehrere Umdrehungen der Lenkwelle mit einem Umdrehungssensorsystem ermittelbar ist.

Die Offenlegungsschrift DE10309060 offenbart eine Einrichtung zur Drehwinkelmessung zur Erfassung von absoluten Werten von Lenkwinkeln während des Betriebs eines Kraftfahrzeugs. Die Einrichtung besteht aus mindestens zwei Messaufnehmern. Durch einen ersten Messaufnehmer werden über einen ersten Signalgeber, insbesondere durch Lesen und Auswerten eines sich mit einer Lenkspindel mitdrehenden Kodes, Lenkwinkel bis zu 360 Winkelgrad ermittelt und an eine Auswerteeinrichtung weitergeleitet. Durch einen zweiten Messaufnehmer wird über einen zweiten Signalgeber, ebenfalls insbesondere durch Lesen und Auswerten eines Kodes, ein für jede Lenkradstellung verschiedener und bestimmter Wert ermittelt und an die Auswerteeinrichtung weitergeleitet.

### Offenbarung der Erfindung

Die erfindungsgemäße Sensoreinheit für ein Fahrzeug mit den Merkmalen des unabhängigen Patentanspruchs 1 hat demgegenüber den Vorteil, dass durch die Überführung der Drehbewegung in eine mechanische Wegänderung immer eine eindeutige Drehposition auch bei mehrfachen Umdrehungen des rotierenden Bauteils möglich ist. In vorteilhafter Weise bleibt beim Versagen der Elektronik, die Drehbewegung in der mechanischen veränderten Wegposition erhalten. Aufgrund der mechanischen Wegänderung steht auch nach ausgeschalteter Zündung oder abgeklemmter Batterie der richtige absolute Drehwinkel zur Verfügung, wobei gleichzeitig ein besonders sicherer Betrieb bzw. eine besonders sichere Erkennung des Drehwinkels mittels einer Abstandserfassung möglich ist. Ein weiterer Vorteil kann die mechanische Vereinfachung darstellen, was zu einer Kostenersparnis führen kann. Vorzugsweise kann die erfindungsgemäße Sensoranordnung zur Bestimmung des Lenkwinkels eines Fahrzeugs eingesetzt werden. Dabei ist das rotierende Bauteil vorzugsweise als Lenksäule des Fahrzeugs oder als Hülse ausgeführt, welche verdrehsicher mit der Lenksäule verbunden ist. Ausführungsformen der vorliegenden Erfindung überführen die Lenkbewegung in eine Wegänderung, welche über eine Abstandsmessung berührungslos detektiert und in einen Lenkwinkel umgerechnet werden kann.

Ausführungsformen der vorliegenden Erfindung stellen eine Sensoranordnung zur Erfassung von Drehwinkeln an einem rotierenden Bauteil in einem Fahrzeug zur Verfügung. Das rotierende Bauteil ist mit einem Messwertgeber gekoppelt, welcher in Verbindung mit mindestens einem Sensor ein den Drehwinkel des rotierenden Bauteils repräsentierendes Signal erzeugt. Erfindungsgemäß ist der Messwertgeber mit dem rotierenden Bauteil als Bewegungswandler ausgeführt, welcher die Rotation des rotierenden Bauteils in eine axiale Translation des Messwertgebers in Bezug auf das rotierende Bauteil umwandelt, wobei der Messwertgeber einen federelastischen Grundkörper mit einem Befestigungsende und einem Messende aufweist, wobei das Messende an dem rotierenden Bauteil geführt ist, und wobei der mindestens eine Sensor den zurückgelegten Weg des Messendes des Messwertgebers ermittelt, welcher den Drehwinkel des rotierenden Bauteils repräsentiert.

Durch die in den abhängigen Ansprüchen aufgeführten Maßnahmen und Weiterbildungen sind vorteilhafte Verbesserungen der im unabhängigen Patentanspruch 1 angegebenen Sensoranordnung zur Erfassung von Drehwinkeln an einem rotierenden Bauteil in einem Fahrzeug möglich.

Besonders vorteilhaft ist, dass das rotierende Bauteil ein Führungsgewinde aufweist, in welchem das Messende des Messwertgebers geführt ist. Durch das direkte Schneiden des Außengewindes in das rotierende Bauteil kann die Anzahl der erforderlichen Komponenten zur Umwandlung der Drehbewegung in eine geradlinige Bewegung in vorteilhafter Weise reduziert werden, was zu einer Kostenersparnis führen kann. Alternativ kann eine Hülse mit einem Führungsgewinde mit dem rotierenden Bauteil gekoppelt werden, wobei das Messende im Führungsgewinde der Hülse geführt ist. Durch die Hülse ist es in vorteilhafter Weise mögliche, die Abmessungen des Messwertgebers an das rotierende Bauteil bzw. an die Lenksäule anzupassen. Die Hülse mit dem Führungsgewinde kann beispielsweise axial auf das rotierende Bauteil aufgeschoben und drehfest mit dem rotierenden Bauteil verbunden werden. Alternativ kann die Hülse mit dem Führungsgewinde über eine Übersetzung mit dem rotierenden Bauteil gekoppelt werden.

In vorteilhafter Ausgestaltung der erfindungsgemäßen Sensoranordnung kann eine Auflösung des ermittelten Drehwinkels des rotierenden Bauteils über eine Ganghöhe des Führungsgewindes am rotierenden Bauteil oder an der Hülse und/oder über das Übersetzungsverhältnis vorgegeben werden.

In weiterer vorteilhafter Ausgestaltung der erfindungsgemäßen Sensoranordnung weist der federelastische Grundkörper eine S-Form auf, wobei die Steifigkeit des federelastischen Grundkörpers so vorgegeben ist, dass eine horizontale Bewegung des Messendes blockiert ist.

In weiterer vorteilhafter Ausgestaltung der erfindungsgemäßen Sensoranordnung ist das Befestigungsende des federelastischen Grundkörpers auf einer Trägerplatte über Befestigungsmittel fixiert. Das Befestigungsende kann beispielsweise über eine Schraubverbindung, Nietverbindung usw. an der Trägerplatte befestigt werden.

In weiterer vorteilhafter Ausgestaltung der erfindungsgemäßen Sensoranordnung kann der mindestens eine Sensor als Abstandssensor ausgeführt werden, welcher den Abstand des Messwertgebers zu einem Bezugspunkt ermittelt, wobei mindestens ein Sensor am Messwertgeber und/oder am Bezugspunkt angeordnet ist. Vorzugsweise wird der Abstand einer ersten und/oder zweiten Stirnfläche des Messwertgebers zum Bezugspunkt gemessen. Der mindestens eine Sensor kann beispielsweise als Wirbelstromsensor, welcher den Abstand über eine Änderung des zugehörigen Magnetfeldes ermittelt, und/oder als kapazitiver Sensor ausgeführt werden, welcher den Abstand über eine Änderung eines elektrischen Feldes ermittelt. Diese Ausführungsformen ermöglichen eine kostengünstige Implementierung der Abstandsmessung. Selbstverständlich können auch andere dem Fachmann bekannte Abstandsmesstechniken implementiert werden.

In weiterer vorteilhafter Ausgestaltung der erfindungsgemäßen Sensoranordnung werden zwei Sensoren vorgesehen, welche eine Differentialabstandssensorik ausbilden. Hierbei ermittelt ein erster Sensor den Abstand des Messwertgebers zu einem ersten Bezugspunkt, und ein zweiter Sensor ermittelt den Abstand des Messwertgebers zu einem zweiten Bezugspunkt. So kann beispielsweise ein erster Abstandssensor den Abstand der ersten Stirnfläche des Messwertgebers zum ersten Bezugspunkt messen, und ein zweiter Abstandssensor kann den Abstand einer zweiten Stirnfläche des Messwertgebers zum zweiten Bezugspunkt messen. Dies ermöglicht in vorteilhafter Weise eine Kompensation von Störeinflüssen, wie beispielsweise einer Temperaturänderung usw.

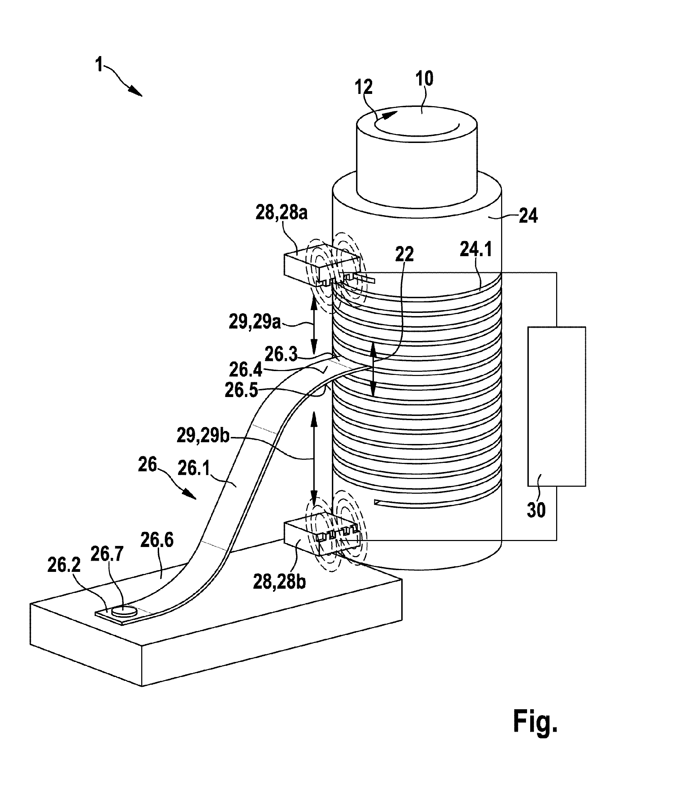

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Die einzige Figur zeigt eine schematische perspektivische Darstellung eines Ausführungsbeispiels einer erfindungsgemäßen Sensoranordnung.

### Ausführungsformen der Erfindung

Wie aus der Figur ersichtlich ist, umfassen Ausführungsformen einer erfindungsgemäßen Sensoranordnung 1 zur Erfassung von Drehwinkeln an einem rotierenden Bauteil 10 in einem Fahrzeug einen Messwertgeber 26 und mindestens einen Sensor 28, 28a, 28b, dessen Ausgabesignal von einer Auswerte- und Steuereinheit 30 ausgewertet wird. Das rotierenden Bauteil 10 ist mit dem Messwertgeber 26 gekoppelt, welcher in Verbindung mit dem mindestens einen Sensor 28, 28a, 28b ein den Drehwinkel des rotierenden Bauteils 10 repräsentierendes Signal erzeugt und an die Auswerte- und Steuereinheit 30 ausgibt. Erfindungsgemäß ist der Messwertgeber 26 mit dem rotierenden Bauteil 10 als Bewegungswandler ausgeführt, welcher die Rotation 12 des rotierenden Bauteils 10 in eine axiale Translation 22 des Messwertgebers 26 in Bezug auf das rotierende Bauteil 10 umwandelt. Hierbei weist der Messwertgeber 26 einen federelastischen Grundkörper 26.1 mit einem Befestigungsende 26.2 und einem Messende 26.3 auf, wobei das Messende 26.3 an dem rotierenden Bauteil 10 geführt ist, und wobei der mindestens eine Sensor 28, 28a, 28b den zurückgelegten Weg des Messendes 26.3 des Messwertgebers 26 ermittelt, welcher den Drehwinkel des rotierenden Bauteils 10 repräsentiert.

Ausführungsformen der erfindungsgemäßen Sensoranordnung 1 können beispielsweise als Lenkwinkelsensor zur Bestimmung des Lenkwinkels eines Fahrzeugs eingesetzt werden. Dabei ist das rotierende Bauteil 10 beispielsweise als Lenksäule des Fahrzeugs ausgeführt.

Wie aus der Figur weiter ersichtlich ist, ist bei dem dargestellten Ausführungsbeispiel der erfindungsgemäßen Sensoranordnung 1 eine Hülse 24 mit einem Führungsgewinde 24.1 axial auf das als Lenksäule ausgeführte rotierende Bauteil 10 aufgeschoben und drehfest mit dem rotierenden Bauteil 10 verbunden. Bei einer alternativen nicht dargestellten Ausführungsform, kann das Führungsgewinde direkt in das rotierende Bauteil 10 geschnitten werden. Eine Auflösung des ermittelten Drehwinkels des rotierenden Bauteils 10 kann über eine Ganghöhe des Führungsgewindes 24.1 am rotierenden Bauteil 10 bzw. an der Hülse 24 vorgegeben werden. Bei einer weiteren alternativen nicht dargestellten Ausführungsform, kann die Hülse 24 mit dem Führungsgewinde 24.1 über eine Übersetzung mit dem rotierenden Bauteil 10 gekoppelt werden. Die Übersetzung kann beispielsweise über einen an der Hülse ausgebildeten Zahnkranz und einem mit dem rotierenden Bauteil 10 gekoppelten Ritzel umgesetzt werden. Eine Auflösung des ermittelten Drehwinkels des rotierenden Bauteils 10 kann dann über eine Ganghöhe des Führungsgewindes 24.1 an der Hülse 24 und/oder über das Übersetzungsverhältnis vorgegeben werden.
Wie aus der Figur weiter ersichtlich ist, weist der federelastische Grundkörper 26.1 eine S-Form auf. Die Steifigkeit des federelastischen Grundkörpers 26.1 ist so vorgegeben, dass das Messende 26.3 in den Gewindegang des Führungsgewindes 24.1 gedrückt und eine horizontale Bewegung des Messendes 26.3 blockiert ist. Des Weiteren ist das Befestigungsende 26.2 des federelastischen Grundkörpers 26.1 über Befestigungsmittel 26.7, welche beispielsweise als Schraube, Niet usw. ausgeführt sind, auf einer Trägerplatte 26.6 fixiert. Durch die Rotation 12 bzw. Drehbewegung des rotierenden Bauteils 10 wird das Messende 26.3 durch die Führung im Führungsgewinde 24.1 in axialer Richtung 22 aufwärts oder abwärts bewegt. Eine horizontale Bewegung des Messende 26.3 wird aufgrund der Steifigkeit des federelastischen Grundkörpers 26.1 unterbunden. Dadurch kann die Rotation 12 des rotierenden Bauteils 10 in eine Höhenänderung des Messendes 26.3 des Messwertgebers 26 überführt werden. Diese Höhenänderung des Messendes 26.3 des Messwertgebers 26 kann durch den mindestens einen Sensor 28, 28a, 28b erfasst und von der Auswerte- und Steuereinheit 30 ausgewertet werden.

Durch die Überführung der Rotation 12 bzw. Lenkbewegung in eine mechanische Translation 22, welche über eine Abstandsmessung ermittelt wird, ist immer eine eindeutige Drehposition bzw. ein eindeutiger Lenkwinkel auch bei mehrfachen Umdrehungen des Lenkrades möglich. Ebenfalls bleibt beim Versagen der Elektronik, die Drehbewegung in der mechanischen veränderten Höhenposition erhalten. Aufgrund der mechanischen Translation 22 steht auch nach ausgeschalteter Zündung oder abgeklemmter Batterie der richtige absolute Drehwinkel bzw. Lenkwinkel zur Verfügung, wobei gleichzeitig ein besonders sicherer Betrieb bzw. eine besonders sichere Erkennung des Drehwinkels bzw. Lenkwinkels mittels der Abstandserfassung möglich ist.

Wie aus der Figur weiter ersichtlich ist, ist der mindestens eine Sensor 28, 28a, 28b als Abstandssensor ausgeführt, welcher den Abstand 29, 29a, 29b des Messendes 26.3 des Messwertgebers 26 zu einem Bezugspunkt ermittelt. Hierbei kann der mindestens eine Sensor 28, 28a, 28b am Messende 26.3 des Messwertgebers 26 und/oder am Bezugspunkt angeordnet werden. Bei dem dargestellten Ausführungsbeispiel ist der mindestens eine Sensor 28, 28a, 28b ortsfest am Bezugspunkt angeordnet. Vorzugsweise ist der mindestens eine Sensor 28, 28a, 28b als Wirbelstromsensor und/oder als kapazitiver Sensor ausgeführt, da dies eine kostengünstige Implementierung der Abstandsmessung ermöglicht. Selbstverständlich können auch andere dem Fachmann bekannte Abstandsmessverfahren zur Ermittlung des zurückgelegten Wegs des Messendes 26.3 des Messwertgebers 26 implementiert werden.

Der beabstandet zu einer Seite 26.4, 26.5 des Messendes 26.3 des Messwertgebers 26 angeordnete Abstandssensor 28 kann einen Abstand 29 zwischen dem Abstandssensor 28 und der korrespondierenden Seite 26.4, 26.5 des Messendes 26.3 des Messwertgebers 26 berührungslos detektieren und ein entsprechendes Ausgabesignal an die Auswerte- und Steuereinheit 30 ausgeben. Die Auswerte- und Steuereinheit 30 wertet das Ausgabesignal des Abstandssensors 28 aus und kann auf den Drehwinkel des rotierenden Bauteils 10 schließen.

Bei dem dargestellten Ausführungsbeispiel bilden jeweils zwei Abstandssensoren 28a, 28b mit der Auswerte- und Steuereinheit 30 eine Differentialabstandssensorik aus. Hierbei ist ein erster Abstandssensor 28a oberhalb des Messendes 26.3 des Messwertgebers 26 angeordnet und ermittelt einen ersten Abstand 29a von einer Oberseite 26.4 des Messendes 26.3 des Messwertgebers 26 zu einem ersten Bezugspunkt. Ein zweiter Abstandssensor 28b ist unterhalb des Messendes 26.3 des Messwertgebers 26 angeordnet und ermittelt einen zweiten Abstand 29b einer Unterseite 26.5 des Messendes 26.3 des Messwertgebers 26 zu einem zweiten Bezugspunkt. Durch die dargestellte Drehrichtung der Rotation 12 des rotierenden Bauteils 10 verkleinert sich der erste Abstand 29a zwischen der Oberseite 26.4 des Messendes 26.3 des Messwertgebers 26 und dem oberhalb des Messwertgebers 26 angeordneten ersten Abstandssensor 28a, während sich der zweite Abstand 29b zwischen der Unterseite 26.5 des Messendes 26.3 des Messwertgebers 26 und dem unterhalb des Messwertgebers 26 angeordneten zweiten Abstandssensor 28b vergrößert. Diese Differentialabstandssensorik ermöglicht in vorteilhafter Weise eine Kompensation von Störeinflüssen, wie beispielsweise der Temperatur usw.

Der mindestens eine Abstandssensor 28 kann in einem mikromechanischen Verfahren in Silizium hergestellt oder direkt auf einer Leiterplatte (Spulen auf Leiterplatte) realisiert werden, wobei die direkte Anordnung auf der Leiterplatte einen weiteren Kostenvorteil aufweisen kann. Dabei können verschiedene Spulenformen implementiert werden, wie beispielsweise rund oder rechteckig, aber auch kompliziertere Spulenformen könnten sich als vorteilhaft erweisen.

Ausführungsformen der vorliegenden Erfindung stellen eine Sensoranordnung zur Erfassung von Drehwinkeln an einem rotierenden Bauteil in einem Fahrzeug zur Verfügung, welche durch die Überführung der Drehbewegung in eine mechanische Wegänderung auch bei mehrfachen Umdrehungen des rotierenden Bauteils immer eine eindeutige Drehposition zur Verfügung stellen. In vorteilhafter Weise bleibt beim Versagen der Elektronik, die Drehbewegung in der mechanischen veränderten Wegposition erhalten. Aufgrund der mechanischen Wegänderung steht auch nach ausgeschalteter Zündung oder abgeklemmter Batterie der richtige absolute Drehwinkel zur Verfügung, wobei gleichzeitig ein besonders sicherer Betrieb bzw. eine besonders sichere Erkennung des Drehwinkels mittels einer Abstandserfassung möglich ist.

## Patentansprüche

1. Sensoranordnung zur Erfassung von Drehwinkeln an einem rotierenden Bauteil in einem Fahrzeug, welches mit einem Messwertgeber (26) gekoppelt ist, welcher in Verbindung mit mindestens einem Sensor (28, 28a, 28b) ein den Drehwinkel des rotierenden Bauteils (10) repräsentierendes Signal erzeugt, wobei der Messwertgeber (26) mit dem rotierenden Bauteil (10) als Bewegungswandler ausgeführt ist, welcher die Rotation (12) des rotierenden Bauteils (10) in eine axiale Translation (22) des Messwertgebers (26) in Bezug auf das rotierende Bauteil (10) umwandelt, **dadurch gekennzeichnet, dass** der Messwertgeber (26) einen federelastischen Grundkörper (26.1) mit einem Befestigungsende (26.2) und einem Messende (26.3) aufweist, wobei das Messende (26.3) an dem rotierenden Bauteil (10) geführt ist, und wobei der mindestens eine Sensor (28, 28a, 28b) den zurückgelegten Weg des Messendes (26.3) des Messwertgebers (26) ermittelt, welcher den Drehwinkel des rotierenden Bauteils (10) repräsentiert.

2. Sensoranordnung nach Anspruch 1, **dadurch gekennzeichnet, dass** das rotierende Bauteil (10) ein Führungsgewinde (24.1) aufweist, in welchem das Messende (26.3) des Messwertgebers (26) geführt ist.

3. Sensoranordnung nach Anspruch 2, **dadurch gekennzeichnet, dass** eine Hülse (24) mit dem Führungsgewinde (24.1) mit dem rotierenden Bauteil (10) gekoppelt ist, wobei das Messende (26.3) im Führungsgewinde (24.1) der Hülse (24) geführt ist.

4. Sensoranordnung nach Anspruch 3, **dadurch gekennzeichnet, dass** die Hülse (24) mit dem Führungsgewinde (24.1) axial auf das rotierende Bauteil (10) aufgeschoben und drehfest mit dem rotierenden Bauteil (10) verbunden ist.

5. Sensoranordnung nach Anspruch 3, **dadurch gekennzeichnet, dass** die Hülse (24) mit dem Führungsgewinde (24.1) über eine Übersetzung mit dem rotierenden Bauteil (10) gekoppelt ist.

6. Sensoranordnung nach einem der Ansprüche 2 bis 5, **dadurch gekennzeichnet, dass** eine Auflösung des ermittelten Drehwinkels des rotierenden Bauteils (10) über eine Ganghöhe des Führungsgewindes (24.1) am rotierenden Bauteil (10) oder an der Hülse (24) und/oder über das Übersetzungsverhältnis vorgegeben ist.

7. Sensoranordnung nach einem der Ansprüche 1 bis 6, **dadurch gekennzeichnet, dass** der federelastische Grundkörper (26.1) eine S-Form aufweist, wobei die Steifigkeit des federelastischen Grundkörpers (26.1) so vorgegeben ist, dass eine horizontale Bewegung des Messendes (26.3) blockiert ist.

8. Sensoranordnung nach einem der Ansprüche 1 bis 7, **dadurch gekennzeichnet, dass** das Befestigungsende (26.2) des federelastischen Grundkörpers (26.1) auf einer Trägerplatte (26.6) über Befestigungsmittel (26.7) fixiert ist.

9. Sensoranordnung nach einem der Ansprüche 1 bis 8, **dadurch gekennzeichnet, dass** der mindestens eine Sensor (28, 28a, 28b) als Abstandssensor ausgeführt ist, welcher den Abstand (29, 29a, 29b) des Messwertgebers (26) zu einem Bezugspunkt ermittelt, wobei mindestens ein Sensor (28, 28a, 28b) am Messwertgeber (26) und/oder am Bezugspunkt angeordnet ist.

10. Sensoranordnung nach Anspruch 9, **dadurch gekennzeichnet, dass** zwei Sensoren (28a, 28b) eine Differentialabstandssensorik ausbilden, wobei ein erster Sensor (28a) einen ersten Abstand (29a) des Messwertgebers (26) zu einem ersten Bezugspunkt ermittelt und ein zweiter Sensor (28b) einen zweiten Abstand (29b) des Messwertgebers (26) zu einem zweiten Bezugspunkt ermittelt.

## Claims

1. Sensor assembly for detecting angles of rotation on a rotating component on a vehicle, which component is coupled to a measured value signal generator (26) which generates, in conjunction with at least one sensor (28, 28a, 28b), a signal which represents the angle of rotation of the rotating component (10), wherein the measured value signal generator (26) is embodied with the rotating component (10) as a movement transducer which converts the rotation (12) of the rotating component (10) into an axial translation (22) of the measured value signal generator (26) with respect to the rotating component (10), **characterized in that** the measured value signal generator (26) has a spring-elastic base body (26.1) with an attachment end (26.2) and a measurement end (26.3), wherein the measurement end (26.3) is guided on the rotating component (10), and wherein the at least one sensor (28, 28a, 28b) determines the travel carried out by the measurement end (26.3) of the measured value signal generator (26) which represents the angle of rotation of the rotating component (10).

2. Sensor assembly according to Claim 1, **characterized in that** the rotating component (10) has a guide thread (24.1) in which the measurement end (26.3) of the measured value signal generator (26) is guided.

3. Sensor assembly according to Claim 2, **characterized in that** a sleeve (24) is coupled with the guide thread (24.1) to the rotating component (10), wherein the measurement end (26.3) is guided in the guide thread (24.1) of the sleeve (24).

4. Sensor assembly according to Claim 3, **characterized in that** the sleeve (24) is fitted with the guide thread (24.1) axially onto the rotating component (10) and connected in a rotationally fixed fashion to the rotating component (10).

5. Sensor assembly according to Claim 3, **characterized in that** the sleeve (24) is coupled with the guide thread (24.1) to the rotating component (10) via a transmission means.

6. Sensor assembly according to one of Claims 2 to 5, **characterized in that** a resolution of the determined angle of rotation of the rotating component (10) is predefined by means of a pitch rate of the guide thread (24) of the rotating component (10) or on the sleeve (24) and/or by means of the transmission ratio.

7. Sensor assembly according to one of Claims 1 to 6, **characterized in that** the spring-elastic base body (26.1) has a S shape, wherein the rigidity of the spring-elastic base body (26.1) is predefined in such a way that a horizontal movement of the measurement end (26.3) is blocked.

8. Sensor assembly according to one of Claims 1 to 7, **characterized in that** the attachment end (26.2) of the spring-elastic base body (26.1) is secured on a carrier plate (26.6) using attachment means (26.7).

9. Sensor assembly according to one of Claims 1 to 7, **characterized in that** the least one sensor (28, 28a, 26b) is embodied as a distance sensor which determines the distance (29, 29a, 29b) of the measured value signal generator (26) from a reference point, wherein at least one sensor (28, 28a, 28b) is arranged on the measured value signal generator (26) and/or on the reference point.

10. Sensor assembly according to Claim 9, **characterized in that** two sensors (28a, 28b) form a differential distance sensor system, wherein a first sensor (28a) determines the first distance (29a) of the measured value signal generator (26) for a first reference point, and a second sensor (28b) determines a second distance (29b) of the measured value signal generator (26) from a second reference point.

## Revendications

1. Arrangement de détection destiné à détecter les angles de rotation sur un composant en rotation dans un véhicule, lequel est couplé avec un codeur de valeur mesurée (26) qui, en association avec au moins un capteur (28, 28a, 28b), génère un signal représentant l'angle de rotation du composant en rotation (10), le codeur de valeur mesurée (26) avec le composant en rotation (10) étant réalisé sous la forme d'un convertisseur de mouvement qui convertit la rotation (12) du composant en rotation (10) en une translation axiale (22) du codeur de valeur mesurée (26) en référence au composant en rotation (10), **caractérisé en ce que** le codeur de valeur mesurée (26) possède un corps de base (26.1) élastique doté d'une extrémité de fixation (26.2) et d'une extrémité de mesure (26.3), l'extrémité de mesure (26.3) étant guidée au niveau du composant en rotation (10) et l'au moins un capteur (28, 28a, 28b) déterminant la course parcourue par l'extrémité de mesure (26.3) du codeur de valeur mesurée (26), laquelle représente l'angle de rotation du composant en rotation (10).

2. Arrangement de détection selon la revendication 1, **caractérisé en ce que** le composant en rotation (10) possède un filet de guidage (24.1) dans lequel est guidée l'extrémité de mesure (26.3) du codeur de valeur mesurée (26).

3. Arrangement de détection selon la revendication 2, **caractérisé en ce qu'**une douille (24) munie du filet de guidage (24.1) est couplée avec le composant en rotation (10), l'extrémité de mesure (26.3) étant guidée dans le filet de guidage (24.1) de la douille (24).

4. Arrangement de détection selon la revendication 3, **caractérisé en ce que** la douille (24) munie du filet de guidage (24.1) est enfilée dans le sens axial sur le composant en rotation (10) et reliée en rotation solidaire avec le composant en rotation (10).

5. Arrangement de détection selon la revendication 3, **caractérisé en ce que** la douille (24) munie du filet de guidage (24.1) est couplée par le biais d'une démultiplication avec le composant en rotation (10).

6. Arrangement de détection selon l'une des revendications 2 à 5, **caractérisé en ce qu'**une résolution de l'angle de rotation déterminé du composant en rotation (10) est prédéfinie par le biais d'une hauteur de pas du filet de guidage (24.1) sur le composant en rotation (10) ou sur la douille (24) et/ou par le biais du rapport de démultiplication.

7. Arrangement de détection selon l'une des revendications 1 à 6, **caractérisé en ce que** le corps de base (26.1) élastique possède la forme d'un S, la rigidité du corps de base (26.1) élastique étant prédéfinie de telle sorte qu'un mouvement horizontal de l'extrémité de mesure (26.3) est bloqué.

8. Arrangement de détection selon l'une des revendications 1 à 7, **caractérisé en ce que** l'extrémité de fixation (26.2) du corps de base (26.1) élastique est fixée sur une plaque porteuse (26.6) par le biais de moyens de fixation (26.7).

9. Arrangement de détection selon l'une des revendications 1 à 8, **caractérisé en ce que** l'au moins un capteur (28, 28a, 28b) est réalisé sous la forme d'un capteur d'écart qui détermine l'écart (29, 29a, 29b) entre le codeur de valeur mesurée (26) et un point de référence, l'au moins un capteur (28, 28a, 28b) étant disposé sur le codeur de valeur mesurée (26) et/ou sur le point de référence.

10. Arrangement de détection selon la revendication 9, **caractérisé en ce que** deux capteurs (28a, 28b) forment un dispositif de détection d'écart différentiel, un premier capteur (28a) déterminant un premier écart (29a) entre le codeur de valeur mesurée (26) et un premier point de référence et un deuxième capteur (28b) déterminant un deuxième écart (29b) entre le codeur de valeur mesurée (26) et un deuxième point de référence.
